# EUROPÄISCHE PATENTSCHRIFT

(11) **EP 0 988 191 B1**
(45) Veröffentlichungstag und Bekanntmachung des Hinweises auf die Patenterteilung: **07.12.2005**
(21) Anmeldenummer: 99906030.4
(22) Anmeldetag: 08.01.1999
(51) Int. Cl.: B60S 1/08

(54) **SCHEIBENWISCHVORRICHTUNG**
WINDSCREEN WIPER SYSTEM
SYSTEME D'ESSUIE-GLACE

(30) Priorität: 19.03.1998 DE 19811941; 20.06.1998 DE 19827541
(43) Veröffentlichungstag der Anmeldung: 29.03.2000
(73) Patentinhaber: ROBERT BOSCH GMBH, 70442 Stuttgart (DE)
(72) Erfinder: KLUG, Hans-Georg, D-76530 Baden-Baden (DE); MICHENFELDER, Gebhard, D-77839 Lichtenau (DE); MEIER, Hans, D-77833 Ottersweier (DE); BLITZKE, Henry, D-77815 Buehl (DE); MAY, Michael, D-77654 Offenburg (DE)
(86) Internationale Anmeldenummer: PCT/DE1999/000019
(87) Internationale Veröffentlichungsnummer: WO 1999/047395

(56) Entgegenhaltungen:
- EP-A- 0 560 538
- DE-A- 4 332 105
- DE-A- 19 516 507
- DE-A- 19 650 491
- US-A- 4 595 866
- PATENT ABSTRACTS OF JAPAN vol. 015, no. 053 (M-1079), 7. Februar 1991 (1991-02-07) & JP 02 286452 A (OMRON TATEISI ELECTRON CO), 26. November 1990 (1990-11-26)

## Beschreibung

Die Erfindung betrifft eine Scheibenwischvorrichtung und ein Verfahren zum Betrieb einer Scheibenwischvorrichtung mit den im Oberbegriff des Anspruchs 1 beziehungsweise des Anspruchs 13 genannten Merkmalen, wobei die Scheibenwischvorrichtung jener der US-A-4 595 866 gattungsgemäß ausgbildet ist.

### Stand der Technik

Scheibenwischvorrichtungen zur Reinigung von Kraftfahrzeugwindschutzscheiben der gattungsgemäßen Art sind bekannt. Nachteilig bei bekannten Wischvorrichtungen ist das Zurückbleiben eines feinen Wasserfilmes auf der zu wischenden Scheibe bei geringen Regenmengen, der hauptsächlich aus einer zu hohen Wischgeschwindigkeit resultiert und die Fahrersicht beeinträchtigen kann. Diese sogenannte Schlierenbildung ist sowohl abhängig vom Benetzungsgrad der Scheibe als auch von der Wischgeschwindigkeit. Je höher die Wischgeschwindigkeit liegt, desto größer ist die Neigung zur Schlierenbildung. Wischanlagen mit nur einem Scheibenwischer sind hinsichtlich einer Schlierenbildung besonders kritisch, da ein Wischer prinzipbedingt deutlich schneller über die Scheibe streichen muß, um die gleiche Reinigungswirkung wie zwei Wischer entfalten zu können.

Bekannte Scheibenwischvorrichtungen weisen meist nur zwei unterschiedliche Wischergeschwindigkeiten sowie eine Intervallstellung auf. Die Wischergeschwindigkeit bei der Intervallstellung entspricht üblicherweise der langsameren Stellung im Dauerbetrieb. Hier besteht der Nachteil, daß bei nur geringen Wassermengen auf der Windschutzscheibe die langsamste Wischergeschwindigkeit noch zu schnell ist, und die Wischer daher zur Schlierenbildung neigen.

Maßnahmen zur variablen Steuerung der Scheibenwischer sind bekannt. So zeigt die DE 33 14 770 C2 eine Einrichtung zur Steuerung eines Scheibenwischermotors, deren Wirkung in erster Linie darauf beruht, Meßsignale eines optischen Regensensors dahingehend auszuwerten, daß bei Messung einer gewissen Mindestregenmenge der Scheibenwischer eingeschaltet wird. Weiterhin soll die Wischergeschwindigkeit bei der Erfassung von nur geringen Regenmengen reduziert werden können. Da eine Mindestgeschwindigkeit für die Scheibenwischer aus Sicherheitsgründen (Sichtbehinderung für den Fahrer) nicht unterschritten werden kann, entsteht eine Lücke zwischen einem Wischen in Intervallen und der geringstmöglichen Wischergeschwindigkeit im Dauerbetrieb. So verbleibt auch bei diesem Erfindungsgegenstand das grundsätzliche Problem der Schlierenbildung bestehen.

Aus der US-A-4 595 866 ist eine Scheibenwischvorrichtung mit den Merkmalen des Oberbegriffs des Anspruchs 1 bekannt.

Eine weitere bekannte Maßnahme besteht in einer kontinuierlichen Regelung der Wischergeschwindigkeit mittels einer Regelvorrichtung, die als Eingangsgröße unter anderem die Signale eines Regensensors verarbeiten kann. So zeigt die DE 197 00 457 C1 eine Vorrichtung und ein Verfahren für eine Scheibenwischanlage, bei der ein Antriebsmotor derart geregelt wird, daß seine Umdrehungszahl und damit die Geschwindigkeit der Scheibenwischer je nach Eingangsgröße variabel ist. Auch hier ist jedoch keine eindeutige quantitative Zuordnung von bestimmten erfaßten Regenmengen zu bestimmten Wischergeschwindigkeiten vorgesehen. Deshalb bleibt auch hier das grundsätzliche Problem der Schlierenbildung bestehen.

### Vorteile der Erfindung

Die erfindungsgemäße Scheibenwischvorrichtung mit den im Anspruch 1 genannten Merkmalen bietet den Vorteil, daß eine Schlierenbildung aufgrund zu hoher Wischergeschwindigkeit zuverlässig vermieden werden kann. Dies kann durch Steuerung des Wischermotors durch eine Erfassung einer Regenmenge, vorzugsweise mit einem optischen Regensensor, erfolgen. Bevorzugt ist hierbei eine eindeutige Zuordnung jeder gemessenen Regenmenge zu einer bestimmten Wischergeschwindigkeit, wobei bei geringen Regenmengen der Wischer zunächst in einem Intervallbetrieb mit variablen Intervallpausenzeiten und bei stärker werdenden Regen in einem Dauerbetrieb mit variabler Wischergeschwindigkeit betrieben wird. Die Steuerung des üblicherweise verwendeten Gleichstrommotors kann entweder durch eine Spannungsregelung oder beispielsweise durch eine Pulsweitenmodulation (PWM) erfolgen.

Durch Senkung der Wischgeschwindigkeit im Intervallbetrieb auf einen relativ niedrigen Wert kann die Schlierenbildung vermieden werden. Anstatt von einer Intervallpausenzeit von beispielsweise fünf Sekunden bei stärkerem Regen sogleich in den Dauerbetrieb zu wechseln, ist es zunächst vorteilhaft, die Intervallpausenzeiten bei gleichbleibend niedriger Wischgeschwindigkeit zu reduzieren. Eine Reduzierung der Intervallpausenzeit auf einen Wert von Null entspricht dann einem Dauerbetrieb. Erst im Dauerbetrieb wird mit zunehmender Regenmenge entsprechend die Wischgeschwindigkeit erhöht. Die niedrigste Wischgeschwindigkeit weist bevorzugt einen Mindestwert auf, bei dem ein Fahrer das Vorbeistreichen des Scheibenwischers noch nicht als sichtbehindern empfindet. Die Anpassung an die unterschiedlichen gemessenen Benetzungsgrade der Scheibe kann entweder durch kontinuierliche Geschwindigkeitsänderung des Antriebsmotors, oder in diskreten Stufen erfolgen.

In einer bevorzugten weiteren Ausgestaltung der Erfindung ist vorgesehen, daß die Geschwindigkeitsregelung des wenigstens einen Wischers über einen Fuzzy-Logik-Algorithmus verfügt, wodurch bei den zwangsläufig auftretenden Schwankungen der Ausgangssignale eines optischen Regensensors zuverlässig vermieden werden kann, daß die Wischergeschwindigkeit beziehungsweise die Intervallpausenzeiten starken kurzfristigen Schwankungen unterliegen.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: ein Diagramm, das einen Zusammenhang zwischen Regenmenge und Wischgeschwindigkeit zeigt und
- Figur 2: ein Gesamtsystem der erfindungsgemäßen Scheibenwischvorrichtung.

### Beschreibung der Ausführungsbeispiele

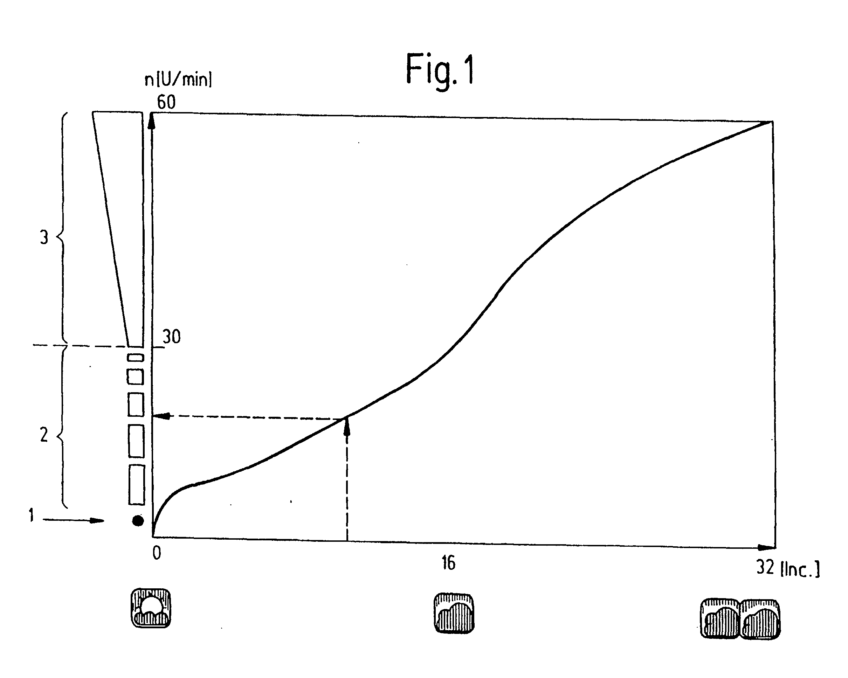

Figur 1 zeigt in einem Diagramm einen Zusammenhang zwischen einer von einem vorzugsweise optischen Regensensor gemessenen Regenmenge und einer Wischgeschwindigkeit einer erfindungsgemäßen Scheibenwischvorrichtung. Auf der horizontalen Achse des Diagramms ist die vom Regensensor erfaßte Regenmenge aufgetragen, auf der vertikalen Achse die Geschwindigkeit des Wischermotors.

Die vertikale Achse ist in drei Bereiche 1, 2, 3 eingeteilt, welche die drei möglichen Arbeitszustände der Scheibenwischvorrichtung charakterisieren. Der Antriebsmotor der Scheibenwischeinrichtung ist im ersten Bereich 1 abgeschaltet und kann im zweiten Bereich 2 in Intervallen mit variablen Intervallpausenzeiten und konstanter Drehzahl laufen. Im dritten Bereich 3 läuft der Motor im Dauerbetrieb, jedoch mit variabler Drehzahl, je nach gemessener Regenmenge. Der dritte Bereich 3 kann ebenso als ein Betrieb mit einer Intervallpausenzeit vom Wert Null charakterisiert werden.

Wie aus dem Diagramm zu erkennen, ist jeder gemessenen Regenmenge genau eine Wischergeschwindigkeit zugeordnet. Bis zu einer mittleren Regenmenge läuft der Wischermotor zunächst in einem Intervallmodus, wobei mit zunehmender Regenmenge die Intervalle zunehmend kürzer werden. Die Intervallpausenzeiten können hierbei beispielsweise bei der geringstmöglichen Wischergeschwindigkeit von circa 30 U/min zwischen 5 Sekunden und circa 1 Sekunde wechseln. Das Diagramm läßt in diesem Bereich eine Kurve konstanter Steigung erkennen, was einen linearen Zusammenhang von gemessener Regenmenge und kürzer werdenen Intervallpausenzeiten bedeutet.

Bei herkömmlichen Wischermotoren liegt eine erste Geschwindigkeit bei circa 40 U/min, eine zweite Geschwindigkeit bei circa 60 U/min. Im Intervallbetrieb läuft der Antriebsmotor ebenfalls in der ersten Stufe, die im folgenden als Nenngeschwindigkeit bezeichnet wird. Eine Drehgeschwindigkeit des elektrischen Antriebsmotors von 30 U/min im gezeigten Ausführungsbeispiel entspricht somit einer geringeren als der Nenngeschwindigkeit. Bei stärker benetzter Scheibe kann der Antriebsmotor schneller als 40 U/min laufen, was somit einer höheren als der Nenngeschwindigkeit entspricht.

Ab einer gewissen Regenmenge wechselt der Wischer in einen Dauerwischbetrieb (Intervallpausenzeit Null), wobei auch hier ein eindeutiger Zusammenhang zwischen gemessener Regenmenge und Wischergeschwindigkeit herrscht. Bei der maximal erfaßten Regenmenge läuft dann der Wischermotor auch mit seiner Maximalgeschwindigkeit, im dargestellten Ausführungsbeispiel mit circa 60 U/min.

Die folgende Tabelle zeigt einen beispielhaften Zusammenhang zwischen einer in sogenannte Inkremente von Null (trockene Scheibe) bis zweiunddreißig (maximale Regenintensität) eingeteilten Regenmenge und der Drehzahl (in Umdrehungen je Minute) des Antriebsmotors der Scheibenwischeinrichtung. Die in der Tabelle angegebenen Drehzahlwerte können je nach verwendeter Steuerungsstrategie entweder als diskrete Stufenwerte für die Motorsteuerung verwendet werden oder als Mittelwerte einer kontinuierlichen, das heißt stufenlosen, Drehzahlanpassung angesehen werden.

| Regenmenge (Inkremente) | Drehzahl (Umdr./min.) |
|---|---|
| 0 .. 5 | 26 |
| 5 .. 7 | 29 |
| 7 .. 9 | 32 |
| 9 .. 12 | 34 |
| 12 .. 16 | 38 |
| 16 .. 20 | 42 |
| 20 .. 24 | 47 |
| 24 .. 28 | 53 |
| 28 .. 32 | 60 |

Die Tabelle verdeutlicht nochmals eine bereits im Diagramm erkennbare geringfügige Nichtlinearität des Zusammenhanges zwischen Regenmenge und Umdrehungsgeschwindigkeit des Antriebsmotors. Diese Nichtlinearität richtet sich jedoch in erster Linie nach im Versuch zu ermittelnden Zweckmäßigkeiten und ist sinnvollerweise durch eine fest vorgegebene oder durch einen Benutzer beeinflußbare Programmierung zu realisieren.

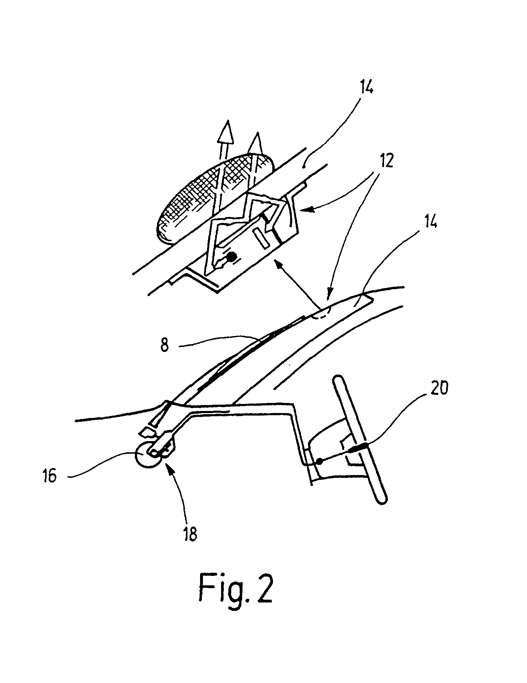

Figur 2 zeigt ein erfindungsgemäßes Gesamtsystem mit einem an sich bekannten optischen Regensensor 12, der innen an einer Windschutzscheibe 14 eines Kraftfahrzeuges angebracht ist. Der Regensensor 12 weist eine optische Sende-Empfangsstrecke auf, wobei das unter einem Winkel in die Windschutzscheibe 14 eingekoppelte Licht an der äußeren trockenen Grenzfläche total reflektiert wird und in den winkelig ausgerichteten Empfänger trifft. Erst durch außen an der Windschutzscheibe 14 haftende Wassertropfen bricht ein Teil des Lichts aufgrund eines geänderten Brechungsindex der Grenzschicht Glas-Wasser nach außen weg und schwächt das Empfangssignal.

Der Regensensor 12 beeinflußt dadurch die Geschwindigkeit eines elektrischen Antriebsmotors 16 zum Antrieb wenigstens eines Scheibenwischers 8 über eine dem Antriebsmotor 16 zugeordnete Steuer- beziehungsweise Regelelektronik 18. Erkennbar ist weiterhin ein herkömmlicher Lenkstockschalter 20 zur manuellen Vorwählung des gewünschten Wischprogrammes durch den Fahrer. So kann beispielsweise mit dem Lenkstockschalter 20 zwischen zwei Wischgeschwindigkeiten beziehungsweise einem Intervallmodus sowie dem zuvor beschriebenen automatischen Programm umgeschaltet werden. Anstatt des Lenkstockschalters 20 kann die manuelle Bedienung des gewünschten Wischprogrammes durch den Fahrer auch auf andere Weise, beispielsweise durch einen Wählhebel im Lenkrad, am Armaturenträger oder auf ähnliche Weise erfolgen.

Die Drehzahleinstellung des Antriebsmotors 16 kann beispielsweise durch eine pulsweitenmodulierte Ansteuerung erfolgen, die eine feinfühlige Regulierung mittels unterschiedlich lange Rechteckimpulse der Versorgungsspannung ermöglicht. Ein fester Zusammenhang zwischen der am Motor 16 anliegenden Spannung und der resultierenden Drehzahl ist aus einer individuellen Motorkennlinie entnehmbar.

## Patentansprüche

1. Scheibenwischvorrichtung, insbesondere zur Reinigung einer Windschutzscheibe eines Kraftfahrzeuges, mit wenigstens einem zwischen zwei Endpositionen verlagerbaren und von einem elektrischen Antriebsmotor (16) angetriebenem Wischer (8),und mit einer Steuereinheit (18), die als Eingangsgröße die Ausgangssignale eines Regensensors (12) sowie die Schaltsignale eines manuell bedienbaren schaltmittels verarbeitet und als Ausgangsgröße eine Versorgungsspannung des elektrischen Antriebsmotors und damit die Wischergeschwindigkeit steuert, wobei der wenigstens eine Wischer (8) in Abhängigkeit von einer durch den Regensensor (12) erfaßten Regenmenge mit variablen Intervallpausenzeiten und mit variablen Wischergeschwindigkeiten betreibbar ist,
**dadurch gekennzeichnet, daß** bei einer geringen Regenmenge der wenigstens eine Wischer (8) mit geringerer Geschwindigkeit als einer Nenngeschwindigkeit in einem Intervallmodus läuft.

2. Scheibenwischvorrichtung nach Anspruch 1, **dadurch gekennzeichnet, daß** bei einer geringen Regenmenge die Intervallpausenzeiten mit zunehmender Regenmenge kürzer werden.

3. Scheibenwischvorrichtung nach einem der vorhergehenden Ansprüche, **dadurch gekennzeichnet, daß** ab einer bestimmten gemessenen Regenmenge der wenigstens eine Wischer (8) in einem Dauerbetrieb mit geringerer Geschwindigkeit als der Nenngeschwindigkeit betreibbar ist.

4. Scheibenwischvorrichtung nach einem der vorhergehenden Ansprüche, **dadurch gekennzeichnet, daß** der wenigstens eine Wischer (8) bei einer größeren Regenmenge mit höherer Geschwindigkeit als der Nenngeschwindigkeit betreibbar ist.

5. Scheibenwischvorrichtung nach einem der vorhergehenden Ansprüche, **dadurch gekennzeichnet, daß** jeder gemessenen Regenmenge genau eine Wischergeschwindigkeit und genau eine Intervallpausenzeit zugeordnet ist.

6. Scheibenwischvorrichtung nach einem der vorhergehenden Ansprüche, **dadurch gekennzeichnet, daß** ein Programm zur Zuordnung der Wischergeschwindigkeiten zu den gemessenen Regenmengen in einem ROM-Speicher der Steuereinheit (18) abgelegt ist.

7. Scheibenwischvorrichtung nach einem der vorhergehenden Ansprüche, **dadurch gekennzeichnet, daß** die Steuerung des elektrischen Antriebsmotors (16) des wenigstens einen Wischers (8) mittels einer Pulsweitenmodulation (PWM) erfolgt.

8. Scheibenwischvorrichtung nach Anspruch 6, **dadurch gekennzeichnet, daß** die Steuerung des elektrischen Antriebsmotors (16) des wenigstens einen Wischers (8) mittels einer Spannungsregelung erfolgt.

9. Scheibenwischvorrichtung nach einem der vorhergehenden Ansprüche, **dadurch gekennzeichnet, daß** der Antriebsmotor (16) in einem Reversierbetrieb läuft.

10. Scheibenwischvorrichtung nach einem der vorhergehenden Ansprüche, **dadurch gekennzeichnet, daß** der Antriebsmotor (16) über ein Gestänge mit dem wenigstens einen Wischer (8) gekoppelt ist.

11. Scheibenwischvorrichtung nach Anspruch 10, **dadurch gekennzeichnet, daß** der Antriebsmotor (16) nur eine Drehrichtung aufweist.

12. Scheibenwischvorrichtung nach einem der vorhergehenden Ansprüche, **dadurch gekennzeichnet, daß** die Geschwindigkeitssteuerung des wenigstens einen Wischers (8) über einen Fuzzy-Logik-Algorithmus verfügt.

13. Verfahren zum Betrieb einer Scheibenwischvorrichtung, insbesondere zur Reinigung einer Windschutzscheibe (14) eines Kraftfahrzeuges, wobei wenigstens ein von einem elektrischen Antriebsmotor (16) angetriebener Wischer (8) zwischen zwei Endpositionen verlagert wird, und mit einer Steuereinheit, die als Eingangsgröße die Ausgangssignale eines Regensensors (12) sowie die Schaltsignale eines manuell bedienbaren Schaltmitels (20) verarbeitet und als Ausgangsgröße eine Versorgungsspannung des elektrischen Antriebsmotor (16) und die damit die Wischergeschwindigkeit gesteuert wird, wobei der wenigstens eine Wischer (8) in Abhängigkeit von einer durch den Regensensor (12) erfaßten Regenmenge mit variablen Intervallpausenzeiten und mit variablen Wischergeschwindigkeiten betrieben wird, **dadurch gekennzeichnet, daß** bei einer geringen Regenmenge der wenigstens eine Wischer (8) mit geringerer Geschwindigkeit als einer Nenngeschwindigkeit in einem Intervallmodus läuft.

## Claims

1. Wiper apparatus, in particular for cleaning a windscreen of a motor vehicle, having at least one wiper (8) which can be moved between two end positions and is driven by an electric drive motor (16), and having a control unit (18) which processes the output signals of a rain sensor (12) and the switching signals of a manually controlled switching means as input variable and controls a supply voltage of the electric drive motor and thus the wiper speed as output variable, it being possible to operate the at least one wiper (8) with variable interval breaks and at variable wiper speeds as a function of an amount of rain detected by the rain sensor (12), **characterized in that**, when there is a small amount of rain, the at least one wiper (8) runs in an intermittent mode at a speed which is lower than a nominal speed.

2. Wiper apparatus according to Claim 1, **characterized in that**, when there is a small amount of rain, the interval breaks become shorter as the amount of rain increases.

3. Wiper apparatus according to either of the preceding claims, **characterized in that**, starting from a specific measured amount of rain, the at least one wiper (8) can be continuously operated at a speed which is lower than the nominal speed.

4. Wiper apparatus according to one of the preceding claims, **characterized in that**, when there is a greater amount of rain, the at least one wiper (8) can be operated at a speed which is higher than the nominal speed.

5. Wiper apparatus according to one of the preceding claims, **characterized in that** each measured amount of rain is assigned a particular wiper speed and a particular interval break.

6. Wiper apparatus according to one of the preceding claims, **characterized in that** a program for assigning the wiper speeds to the measured amounts of rain is stored in a read-only memory of the control unit (18).

7. Wiper apparatus according to one of the preceding claims, **characterized in that** the electric drive motor (16) of the at least one wiper (8) is controlled by means of pulse-width modulation (PWM).

8. Wiper apparatus according to Claim 6, **characterized in that** the electric drive motor (16) of the at least one wiper (8) is controlled by means of voltage regulation.

9. Wiper apparatus according to one of the preceding claims, **characterized in that** the drive motor (16) runs in reverse mode.

10. Wiper apparatus according to one of the preceding claims, **characterized in that** the drive motor (16) is coupled to the at least one wiper (8) by means of a linkage.

11. Wiper apparatus according to Claim 10, **characterized in that** the drive motor (16) has only one direction of rotation.

12. Wiper apparatus according to one of the preceding claims, **characterized in that** the speed-control system of the at least one wiper (8) has a fuzzy-logic algorithm.

13. Method for operating a wiper apparatus, in particular for cleaning a windscreen (14) of a motor vehicle, at least one wiper (8) which is driven by an electric drive motor (16) being moved between two end positions, having a control unit which processes the output signals of a rain sensor (12) and the switching signals of a manually controlled switching means (20) as input variable and controls a supply voltage of the electric drive motor (16) and thus the wiper speed as output variable, the at least one wiper (8) being operated with variable interval breaks and at variable wiper speeds as a function of an amount of rain detected by the rain sensor (12), **characterized in that**, when there is a small amount of rain, the at least one wiper (8) runs in an intermittent mode at a speed which is lower than a nominal speed.

## Revendications

1. Installation d'essuie-glace, notamment pour le pare brise d'un véhicule automobile, comportant au moins un balai d'essuie-glace (8) déplacé entre deux positions de fin de course par un moteur électrique (16) et une installation de commande (18) recevant comme grandeur d'entrée, les signaux de sortie d'un capteur de pluie (12) et les signaux de commutation d'un moyen de commutation manuel pour fournir comme grandeur de sortie une tension d'alimentation du moteur électrique et commander ainsi la vitesse de balayage,
le balai (8) travaillant en fonction de la quantité de pluie saisie par le capteur de pluie (12) avec des pauses d'intervalles variables et des vitesses de balayages variables,
**caractérisée en ce que**
pour une faible quantité de pluie le balai (8) travaille à une vitesse plus faible que la vitesse nominale en mode intermittent.

2. Installation selon la revendication 1,
**caractérisée en ce que**
pour une pluie faible, les intervalles des pauses se raccourcissent à mesure que la quantité de pluie augmente.

3. Installation selon l'une des revendications précédentes,
**caractérisée en ce que**
pour une certaine quantité de pluie, déterminée, mesurée, le balai (8) fonctionne en régime permanent à vitesse plus faible que la vitesse nominale.

4. Installation selon l'une des revendications précédentes,
**caractérisée en ce que**
pour une quantité de pluie importante, le balai (8) fonctionne à une vitesse plus élevée que la vitesse nominale.

5. Installation selon l'une des revendications précédentes,
**caractérisée en ce qu'**
une vitesse d'essuyage précise et une durée de pause précise sont associées à chaque quantité de pluie mesurée.

6. Installation selon l'une quelconque des revendications précédentes,
**caractérisée en ce qu'**
un programme associant les vitesses d'essuyage aux quantités de pluie mesurées est enregistré dans une mémoire ROM de l'unité de commande (18).

7. Installation selon l'une quelconque des revendications précédentes,
**caractérisée en ce que**
la commande du moteur électrique (16) du balai d'essuie-glace (8) est faite par modulation de largeur d'impulsion (PWM).

8. Installation selon la revendication 6,
**caractérisée en ce que**
la commande du moteur électrique (16) du balai (8) se fait à l'aide d'une régulation de tension.

9. Installation selon l'une quelconque des revendications précédentes,
**caractérisée en ce que**
le moteur (16) fonctionne en mode réversible.

10. Installation selon l'une quelconque des revendications précédentes,
**caractérisée en ce que**
le moteur (16) est couplé à au moins un balai d'essuyage (8) par une tringlerie.

11. Installation selon la revendication 10,
**caractérisée en ce que**
le moteur (16) ne tourne que dans un sens de rotation.

12. Installation selon l'une quelconque des revendications précédentes,
**caractérisée en ce que**
la commande de vitesse du balai d'essuie-glace (8) dispose d'un algorithme de logique flou.

13. Procédé de commande d'une installation d'essuie-glace, notamment pour le pare brise (14) d'un véhicule automobile, selon lequel au moins un balai d'essuie-glace (8) entraîné par un moteur électrique (16) se déplace entre deux positions de fin de course et est commandé par une unité de commande recevant comme grandeur d'entrée les signaux de sortie d'un capteur de pluie (12) et les signaux de commutation d'un moyen de commutation manuel (20) pour les traiter et fournir en sortie une grandeur de tension pour le moteur électrique (16) de manière à commander ainsi la vitesse d'essuyage,
le balai d'essuyage (8) fonctionnant selon les quantités de pluie saisies par le capteur de pluie (12) avec des pauses variables et des vitesses variables,
**caractérisé en ce que**
pour une faible quantité de pluie le balai d'essuie-glace (8) travaille à une vitesse plus faible que la vitesse nominale en mode intermittent.
